# EUROPEAN PATENT SPECIFICATION

(11) **EP 1 891 793 B1**
(45) Date of publication and mention of the grant of the patent: **16.08.2017**
(21) Application number: 06763078.0
(22) Date of filing: 03.05.2006
(51) Int. Cl.: H04L 29/08, H04L 12/28, H04L 12/44

(54) **NETWORK CONNECTION SWITCHING UNIT AND NETWORK STATION**
NETZWERKVERBINDUNGS-SCHALTEINHEIT UND NETZWERKSTATION
UNITÉ DE COMMUTATION DE CONNEXION RÉSEAU ET STATION DE RÉSEAU

(30) Priority: 14.06.2005 DE 102005027387
(43) Date of publication of application: 27.02.2008
(73) Proprietor: Thomson Licensing, 92130 Issy-les-Moulineaux (FR)
(72) Inventor: WEBER, Michael, 30559 Hannover (DE); HÜTTER, Ingo, 30982 Pattensen (DE)
(74) Representative: Huchet, Anne
(86) International application number: PCT/EP2006/062002
(87) International publication number: WO 2006/133997

(56) References cited:
- WO-A-2006/027314
- WO-A2-2006/035302
- US-A1- 2002 078 161
- ALTOTEC GMBH: "SIMPLE UPNP PROXY PROTOCOL(SUPP) ARCHITECTURE version 0.91" UPNP SPECIFICATION, 4 February 2002 (2002-02-04), pages 1-57, XP002227050
- MICROSOFT CORP.: "Universal Plug and Play Device Architecture, UPnP, Version 1.0" UPNP SPECIFICATION, 8 June 2000 (2000-06-08), pages 1-86, XP002210614

## Description

The invention relates to the technical field of data transmission in a network of distributed stations, particularly in a "home network". In particular, the invention relates to a network connection switching unit which sets up data connections between network stations arranged in a star formation.

### Background of the invention

Various home network standards are available for networking devices in the home sector.

A consortium of companies, particularly the companies in the computer industry, led by Microsoft, have started an initiative for specifying a piece of network control software based on the existing Internet protocol (IP). This network system has become known by the acronym UPnP (Universal Plug and Play). In this system, the specification is not made primarily for consumer electronics devices, but rather other devices may also be integrated in the network, particularly personal computers "white goods" household appliances, such as refrigerators, microwave ovens, washing machines, or else heating controllers, lighting controllers, alarm systems, etc. The transmission system which is preferably used for implementing a UPnP network is based on the known Ethernet bus system. Many variants of this bus system have been standardized, so that in the home network sector it is possible to select the respective optimum variant.

In the home network sector, it is recommended that "star calling" be used. By way of example, the standardized 100-Mbit/s variant called 100gase/TX can be used, which uses a "CAT/5 cable" which can have a maximum length of 100 m. In a case of such star cabling, the cables are routed together to the individual network stations in a network connection switching unit, also called a "switch" or "switching hub". Such a network connection switching unit is able to convey data packets between the individual subscriber stations. It thus has its own control logic and the software required for this purpose.

The UPnP network system contains a stipulation that new stations need to log on in the network and stations which are switched off need to log off from the network. This is done using special messages based on the SSD protocol (Simple Service Discovery Protocol).

From US-A-2002/078161 a method and system for coupling IP networks with non-IP networks is known. The system allows for the control of non-UPnP-compliant devices with a UPnP compliant controller.

From Altotec GmbH: "Simple UPnP Proxy Protocol (SUPP) Architecture version 0.91", UPnP Specification, 4 Feb. 2002, pages 1 - 57, XP002227050 a protocol is known which extends the device functionality so that the device may participate in UPnP networking.

From another application of the applicant WO-A-2006/027314 a network switching unit is known which comes with additional means for detecting the decoupling of a network station. The detection means then initiate the automatic sending of a logoff message by the network connection switching unit.

From WO-A-2006/035302 a system and method is known for providing enhanced UPnP support on constrained devices. A low power proxy is used that aggregates data for transmission to the constrained devices in various situations. With the help of the low power proxy a constrained device is enabled to switch to a low power state to save energy. When the low power proxy cannot fullfill the task of the constrained device it represent in the UPnP network, it has the capability to wake-up the constrained device in sleep mode.

### Invention

One problem with UPnP-based networks is that the UPnP devices which need to be available in the network must constantly be switched on. On the basis of the UPnP standard, not only are the aforementioned logon and logoff messages which the network stations need to evaluate transmitted, but also a few messages, which the individual network stations use to renew the allocated IP address and to confirm their activity, for example, are periodically repeated in the course of operation. Such messages are the UPnP discovery messages, for example, which the network stations available in the network need to respond to.

The invention intervenes at this point and aims to achieve a way in which unused UPnP devices can be switched off but continue to be identified as UPnP devices in the UPnP network.

The solution based on the invention is to provide the network connection switching unit with additional communication maintenance means in it which maintain the communication for an inactivated/switched-off network station at least to a restricted extent. The inactivated/switched-off network stations change to a power-saving mode of operation, so that the power requirement of these devices in the network is greatly reduced. Despite this, the inactivated devices continue to be available in the network, so that the UPnP standard does not need to be changed for this as regards the bus management messages. With the help of communication means which send a response message back to the network station in a discovery phase for searching if the network connection switching unit is equipped with communication maintenance means and indicate in the response message whether the station is directly or indirectly connected to the answering network connection switching station, the configuration of network stations being allowed to enter sleep mode or not is subjectively increased.

It is very advantageous if the communication maintenance means have detection means for identifying the break in a connection at a network connection point, and in such a case generate a logoff message for the network station connected via the latter. This ensures that a network station which is no longer available does not feign availability in the network.

The measures presented in the dependent claims permit advantageous developments and improvements of the inventive network connection switching unit.

It is likewise advantageous if the communication maintenance means are deactivated for a network station when a logon message from this network station has been identified. This is because in this case a network station which was initially switched off has been switched on again. This network station then no longer needs to be represented by the network connection switching unit.

It is also advantageous that the communication maintenance means send a wakeup message to the inactivated network station when a message for the inactivated network station has arrived which cannot be handled independently by the communication maintenance means. This measure ensures that if a network station which has been switched off itself is needed, it is also automatically woken up. The wakeup mechanism may advantageously be based on a Wake-on-LAN data packet, which is transmitted to the switched-off network station. In the power-saving mode of operation, the network stations monitor the data traffic such that they can identify such a wakeup data packet.

### Drawings

Exemplary embodiments of the invention are illustrated in the drawings and are explained in more detail in the description below. In the drawings:
Figure 1
   shows the structure of an exemplary network having two network connection switching units;
   shows a protocol overview for the inventive network connection switching unit;
Figure 3
   shows a block diagram of the inventive network connection switching unit;
Figure 4
   shows a block diagram of an inventive network station;
Figure 5
   shows a sequence diagram for the switched-on phase of a network station;
Figure 6a
   shows a sequence diagram for the switched-off phase of a network station; and
Figure 6b
   shows a sequence diagram for the switched-on phase of a network station after a wakeup message.

### Description of the invention

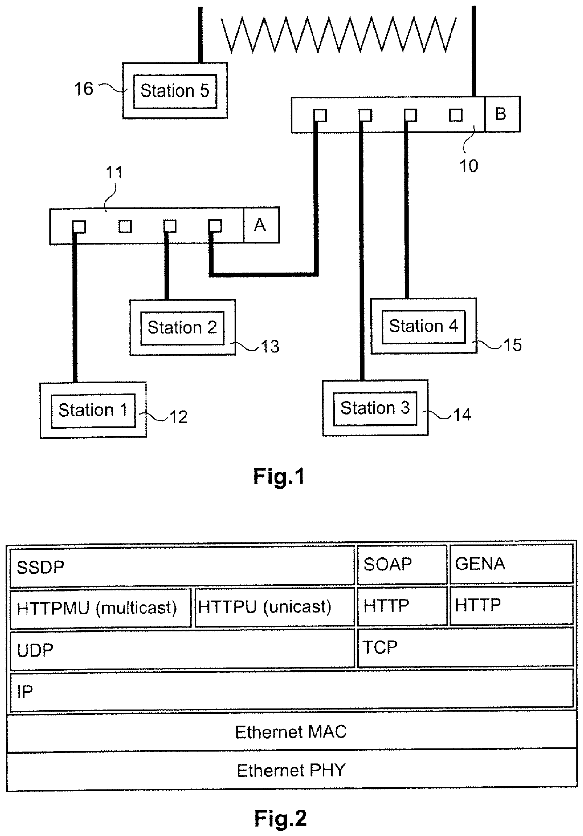

Figure 1 shows an exemplary home network having 5 network stations 12-16 and two network connection switching units 10, 11. The bus connections between the network connection switching units 10, 11 and the network stations 12-15 are based on Ethernet technology, specifically 100 Base/TX Ethernet. The network station 16 is wirelessly connected to the network connection switching unit 10, for example by means of wireless LAN in line with IEEE 802.11b. The connection between the two network connection switching units 10 and 11 is also based on Ethernet technology. For each network connection switching unit 10, 11, four network connection points (also called ports) are shown.
The transmission system used for the data transmission in the network is the 100 Base/TX variant of the Ethernet bus system, which has already been mentioned in the introduction. This variant is considered to be adequate for the chosen application instance, but in other application instances a different variant may be used as transmission system. For higher data rates, systems known as 1000 Base/T or 1000 Base/SX or 1000 Base/LX are available, for example. In this case, the last two variants are based on optical fibre technology. The network shown in Figure 1 is UPnP-based, i.e. the individual network stations are designed on the basis of the UPnP standard.

The Ethernet bus system does not provide a secure connection for the higher protocol layers, since transmission frames can be lost. This is not adequate for transmitting a large amount of useful data, which is why the transmission is frequently protected by the higher protocol layers. For the UPnP network system, the next highest protocol level provided is the IP protocol (Internet protocol) at the level of the network layer in the OSI layer model for data communication. The data link layer is first provided by the TCP protocol (Transmission Control Protocol) based thereon. For both protocol levels, which are no longer part of the Ethernet standard, separate standardizations apply, with reference merely being made to these for the disclosure of the invention. A full protocol architecture used in the UPnP network system can be found in the UPnP specification (available at www.upnp.org).

Figure 2 shows the particular protocol architecture which is required for a network connection switching unit based on the invention. The two Ethernet protocol levels Ethernet PHY and Ethernet MAC are arranged on the bottommost levels. Above these is the aforementioned protocol level IP. The transport layer level then holds the UDP protocol (User Datagram Protocol), which is used for transmitting all messages related to device identification (Device Discovery).

Situated above this is a special version of the HTTP protocol (Hypertext Transfer Protocol). This is the HTTPMU protocol (HTTP multicast over UDP). Such HTTP messages are thus forwarded via the bottom UDP and IP protocol levels using inclusive addressing.

Above the HTTPMU protocol level, there is also the SSDP protocol (Simple Service Discovery Protocol).

Besides the UDP protocol, the TCP protocol is also used, which is used for transmitting all other UPnP messages, particularly for device/service descriptions, for device control and for event notification. Above this, there is the HTTP protocol, and above that, at the level of the SSDP protocol, the SOAP protocol, earlier Simple Object Access Protocol. This is used in order to make function calls (Remote Procedure Calls, RPC) on other devices. In addition, the GENA (General Event Notification Architecture) protocol may also be implemented, which allows registration operations for event notifications in other network stations.

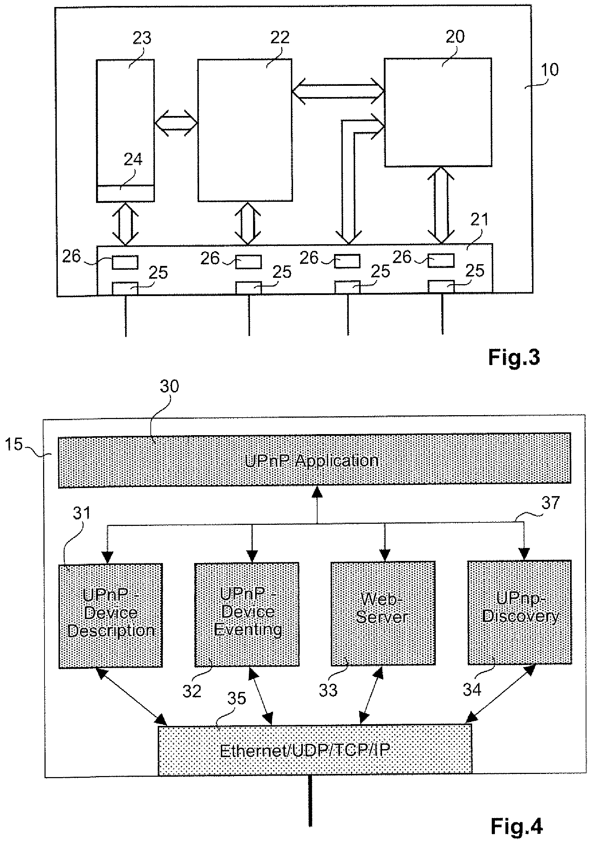

In the network structure shown in Figure 1, only one of the two network connection switching units 10, 11 is designed in line with the invention. It is subsequently assumed that the network connection switching unit 10 is designed with the invention, but the network connection switching unit 11 is not, on the other hand. The design of the inventive network connection switching unit 10 is explained below with reference to Figure 3. In this figure, the reference numeral 20 denotes a switching matrix. This switching matrix can be used to set up any connections between the network stations connected via the network connection points 25. The switching matrix 20 is controlled using a microcontroller 22 in the network connection switching unit 10. This microcontroller also performs further tasks in the network connection switching unit, which will be discussed in more detail below. The interface circuit 21 contains the circuit components which are relevant for the Ethernet protocol. The reference numeral 23 denotes a memory unit or a memory area in such a unit. This memory 23 is used for registering the information which is required in the network connection switching unit for the communication maintenance for a network station which is switched off. The reference numeral 24 also denotes a special register within this memory area, said special register being linked directly to detection means 26, provided in the interface circuit 21, which establish whether a network connection has been disconnected manually. In simple terms, removing a network connection connector opens or closes particular contacts on these detection means, which results in associated latching flip-flops being set or reset. In the case of the solution mentioned by way of example with the special register 24 situated in the memory area 23, the flip-flop outputs are connected directly to an interrupt input, which then addresses the microcontroller 22, which can perform appropriate evaluation.

Suitable network connection points 25 are the usual connectors for receiving known RJ45 connectors. The inventive communication maintenance means essentially comprise the components 22, 23, 24, 26.

Figure 4 shows the design of a network station adapted in line with the invention. The reference numeral 35 denotes a protocol stack comprising the protocol levels Ethernet, IP and UDP/TCP. Reference numeral 31 is a block storing the UPnP device description. Reference numeral 32 denotes a block in which event notifications are managed (UPnP Eventing). A standard component of the UPnP device is also a web server 33. The reference numeral 34 denotes a UPnP discovery unit. Above these blocks, a UPnP application program is also denoted by the reference numeral 30. All of these units are standard components in a UPnP device and are described in detail in the UPnP specification.

The inventive network station is designed such that it has implemented two different modes of operation. One implemented mode of operation is the normal mode of operation, in which the device is fully supplied with power and participates in the network data traffic independently. The other mode of operation corresponds to a power-saving mode of operation, in which the main board of the device provides a standby voltage even in the switched-off state and uses it to supply the communication interface 35 with power. This voltage is sufficient for the chip in the communication interface to monitor the network permanently and to wait for a "wakeup data packet". This data packet contains the instruction to switch off the device completely. The top protocol layers, such as TCP/UDP/IP, do not need to be available in this power-saving mode. For this reason, the wakeup data packets are of very simple design. They comprise a single Ethernet data frame which, somewhere in its payload, contains a preamble of 6 bytes with the respective value 0xFF and then, after that, 16 times the hardware address (MAC address) of the network station which is to be woken up. Such wakeup data packets mentioned correspond to the Wake-On-LAN data packet known in the prior art, as is used in PC networks. For more details on the Wake-On-LAN capability of a network station, reference is made to the article by Benjamin Benz, "Netzwerkwecker" [Network interrupts] in the periodical "c't", 2005, issue 2, pages 200 to 201.

In line with the invention, the wakeup message described is generated by the extended network connection switching unit 10, this specifically being done when, after the network station 12 has been switched off, a data packet has arrived at the network connection switching unit 10 which the communication maintenance means 22 to 26 cannot handle fully. In this case, the switched-off device is switched on by a wakeup message and the data packet in question is forwarded to the woken network station. This network station is able to handle the request contained therein itself.

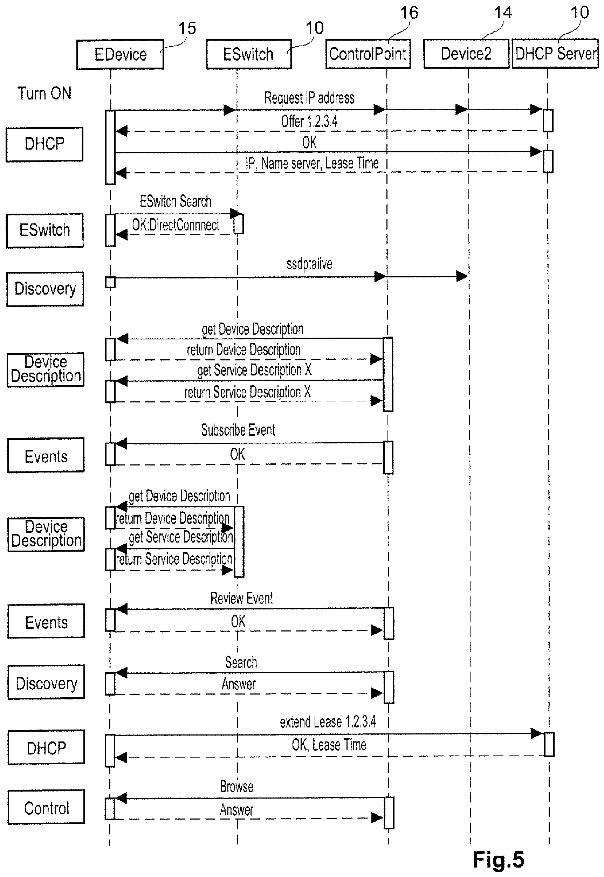

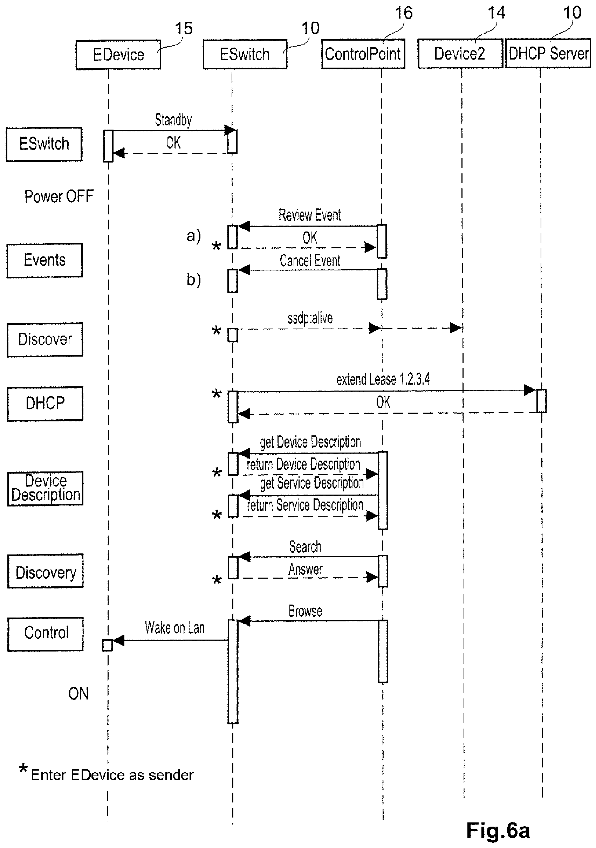

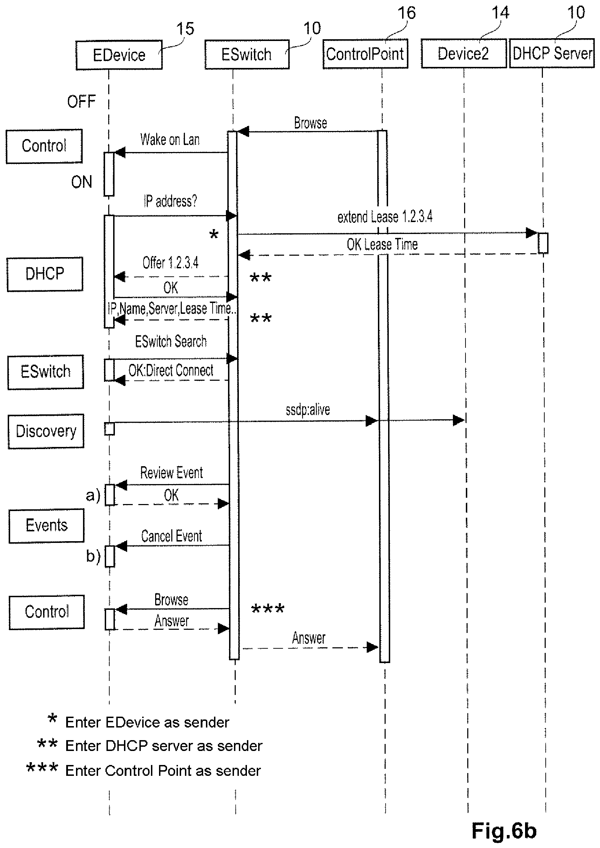

The interplay between the inventive network connection switching unit and the inventive network station is described in more detail below with reference to Figures 5 and 6.

Figure 5 shows the interplay following a switch-on operation in the inventive network station. After the switch-on operation, the network station 15 first of all requests an IP address from the network's DHCP server. In the network shown in Figure 1, it is assumed that the network connection switching unit 10 also performs the role of the DHCP server. The DHCP server makes the address allocation and passes an appropriate submission to the network station 15 using the DHCP protocol (Dynamic Host Configuration Protocol). If there are a plurality of DHCP servers in the network, the network station 15 has, on the basis of the DHCP protocol, the option of selecting one of the submitted IP addresses, for example because it has the longest validity period, also called lease time. The network station 15 then contacts the DHCP server 10 using the selected IP address, and the DHCP server 10 then confirms the IP address and transmits the further relevant data to the network station 15. Next, the network station 15 sends a search query via the network in order to find out whether the network is connected to a network connection switching unit based on the invention. This search query corresponds to a UDP packet with the following exemplary content:

### ESWITCH-SEARCH

The search query is sent using inclusive addressing (to a broadcast address) and addresses all connected stations. It is a certainty that the network stations designed in line with the invention understand this message. The other network stations ignore this message. The network connection switching units which are not designed in line with the invention simply forward this search query to all the outputs. The inventive network connection switching unit 10 will first of all receive the search query and identify that it is a special search query for the inventive type of network connection switching unit. The network connection switching unit 10 will then not forward this search query to further switching units or network stations. Instead, it will respond to the search query itself and thus confirm that it itself is a network connection switching unit 10 which corresponds to the search query. This response corresponds to a UDP packet with the following exemplary content:

### ESWITCH-RESPONSE:DIRECT-CONNECTED

The network station 15 therefore knows that it is directly connected to an extended network connection switching unit 10. It can then leave the network and change to the power-saving mode after a settable waiting time. Before that, however, the network station 15 also sends a logon message (SSDP:alive).

The appearance of the response when, although the network connection switching unit is designed in line with the invention, it is not connected directly to the requesting network station is as follows:

### ESWITCH-RESPONSE:INDIRECT-CONNECTED

In this case, the network station cannot change to the power-saving mode of operation. This is because the network connection switching unit to which it is connected does not support this mode of operation.

This is followed by the usual communication in the UPnP network for the case in which a service request arrives at the network station 15 from a control device 16 in the network (control point device). To this end, the control device 16 requests the device descriptions based on the UPnP standard. This is done using the standardized "Get Device Description" and "Get Service Description" HTTP:GET requests. Normally, a control device 16 will register in the device 15 to be controlled for the notification of particular events too, this registration being performed via the UPnP Eventing system. Next, Figure 5 shows that the network connection switching unit 10 for its part requests the device description and service description from the network station 15. This is done as a precautionary measure within the context of the invention, in order to equip the communication maintenance means in the network connection switching unit 10 such that they can also handle requests to the network station 15 when it is in the power-saving mode of operation, i.e. in the inactivated mode of operation. The data received are stored in the memory 23, as described previously. Figure 5 next shows that the control device 16 renews the registration for particular event notifications. The UPnP standard has provision for this. Similarly, the logon message SSDP:alive is also repeated periodically at particular intervals. Search queries can be sent to the network by a control device at any time, which is the next thing shown in Figure 5.

The validity period of the IP address of the network station 15 has a time limit on the basis of the DHCP protocol, as previously mentioned. The next thing to happen in Figure 5 is therefore a request to the DHCP server 10 from the network station 15, asking for an extension to the validity time. The DHCP server 10 meets this request in the response. In the last part of Figure 5, a control request is then also sent to the network station 15 by the control device 16.

This may be a Browse instruction, for example, in order to request the content of a directory in a device 15 which is to be controlled, for example. As a further example, it may also be a start or stop command etc.

The text below explains the interplay of the devices for the case in which the network station 15 changes to the power-saving mode of operation. In this case, the communication with the inactive network station 15 is maintained by the inventive network connection switching unit 10. It is first of all shown that the network station changing to the power-saving mode of operation announces this change of mode of operation to the network connection switching unit. This is done using a UDP packet with the following content:

### STANDBY

The network connection switching unit returns a confirmation packet.

On the basis of the UPnP system, there are various types of requests which a UPnP device needs to answer. The extended network connection switching unit 10 does not need to be designed to answer all of these requests. There are certain degrees of freedom here for the design of the network connection switching unit. Depending on the chosen design, more requests are answered by the network connection switching unit and hence the represented device is woken less often, or fewer requests are answered and hence the device is woken more often. The requests which the network connection switching unit needs to answer can be permanently programmed in. An extension involves an entire protocol being defined which the network station and the network connection switching unit used to negotiate which requests the network connection switching unit needs to answer. A further alternative implementation involves the network connection switching unit 10 also logging all requests to the network station, including the associated responses, in a first phase and then later answering such requests independently and finally waking the inactivated device only when an unknown request is sent to it. The requests shown in Figure 5 are therefore examples and should not be considered to be conclusive.

The topmost part of Figure 6a shows that the control device 16 requests renewal of the registration for particular event notifications on the inactive network station 15. This message is sent to the network connection switching unit 10 and is handled there. The network connection switching unit 10 confirms the renewal of the registration for the requested event notifications and in so doing enters the actually inactive network station 15 as sender. As a second case, Figure 6a shows that instead of a renewal for event notifications a request is made for the deletion of the registration for event notifications on the inactive device 15. In that case, the network connection switching unit 10 would delete the relevant entry in the registration table in the memory 23.

Next, the network connection switching unit 10 autonomously sends a repeat logon message SSDP:alive for the inactive network station 15. In this case too, the network station 15 is again entered as sender. Next, it is shown that the extension to the validity period for the allocated IP address is also requested independently by the network connection station 10 on the DHCP server 10. Since the network connection switching unit 10 itself is also configured as a DHCP server, this notification does not actually need to be transmitted via the Ethernet bus. However, the standard confirmation of the extension to the validity time is also returned to the network connection switching unit 10 internally. Next, Figure 6a shows that the control device 16 requests the device description and service description from the inactive network station 15.

These requests are also answered by the network connection switching unit 10. To this end, the network connection switching unit 10 had, of course, requested and stored the relevant information, as shown in Figure 5.

A search query is also answered by the network connection switching unit 10, as Figure 6a shows.

The last part of Figure 6a shows that the control device 16 sends a control request to the inactivated device 15. This request cannot be handled by the network connection switching unit 10. For this reason, the network connection switching unit 10 sends the wakeup message via the bus to the network station 15, in line with the invention. This message is used to change over the network station 15 to the normal mode of operation, as explained above.

Figure 6b then shows the rest of the communication cycle. When it is switched on again, the network station 15 first of all sends the request for the IP address, as shown in Figure 5. This request is intercepted by the network connection switching unit 10 and is converted into a renewal request for the validity time for the existing IP address to the DHCP server 10. The sender entered here is then the network station 15. The renewal of the validity time which is performed is then converted by the network connection switching unit 10 into a standard-compliant message containing the submission of the requested IP address, for which the sender entered is the DHCP server 10. The network station 15 will then adopt the submitted address, because only the address already allocated is being submitted by the network connection switching unit 10 as the sole selection option. The subsequent notification determines the parameters Name server, Lease time etc. and is produced artificially by the network connection switching unit 10, with the DHCP server being entered as sender. The search query for an inventive network station is then sent by the network station 15 again, as already shown in Figure 5. This is followed by the logon message SSDP:alive

Next, the network connection switching unit 10 notifies the network station 15 of the current level of registrations for event notifications. This is required because in the time in which the network station 15 was inactive such registrations may have been received from a few other network stations, and these registrations have been handled by the network connection switching unit. Conversely, some event notifications may already have been deleted, of which the network station 15 is alternatively notified in this phase. When the registrations for the event notifications have been synchronized, the network connection station 10 sends the actual control request to the activated network station 15. This request contains the control device 16 entered as sender. This request is then handled and answered by the activated network station 15, as provided for in the UPnP standard.

Figure 1 shows that in addition to the inventive network connection switching unit the exemplary network also contains a conventional network connection switching unit 11. This means that the stations 12 and 13 connected via this network connection switching unit 11 cannot enter the power-saving mode, even if they are designed for it. Since such stations also send the relevant search query to the network when they are connected to the network, however, it is necessary for them to be able to tell that they are not connected to the inventive network connection switching unit. The inventive search query would also be forwarded to the inventive network connection switching unit 10 by the conventional network connection switching unit 11. The inventive network connection switching unit 10 will then respond to this search query as before. The fact that the search query comes via an uplink connection from the conventional network connection switching unit 11 and not from a directly connected device might tell the network connection switching unit 10 that the requesting network station is not connected to it itself. It will then return the response with the parameter INDIRECT-CONNECTED. This tells the requesting device that although the network contains an inventive network connection switching unit it itself is not connected to it, however, and therefore cannot change to the power-saving mode when it wishes to be still available in the network.

## Claims

1. Network connection switching unit (10) having a number of network connection points (25), having switching means (20) which are configured to set up physical connections between the network connection points (25) intermittently or with periodic recurrence, having first evaluation means for evaluating logoff messages from the network stations connected via the network connection points (25) and also communication maintenance means (22 to 26) which are configured to maintain the communication for an inactivated network station (15) at least to a restricted extent in place of the inactivated network station (15),
- wherein the communication maintenance means (22 to 26) have second evaluation means for evaluating a search request message, ESWITCH-SEARCH, from a network station which signals the network station's wakeup capability, wherein the second evaluation means are configured to generate a confirmation message in response to the search request message, ESWITCH-SEARCH, in order to signal to the network station (15) that it is directly connected to a network connection switching unit (10) having communication maintenance means (22 to 26) in case the search request message came from a network station which is directly connected to one of the network connection points (25) of the network connection switching unit (10), and
- wherein the second evaluation means are configured to generate a confirmation message in response to the search request message, ESWITCH-SEARCH, in order to signal to the network station (15) that it is indirectly connected to a network connection switching unit (10) having communication maintenance means (22 to 26) in case the search request message came from a network station which is not directly connected to one of the network connection points (25) of the network connection switching unit (10).

2. Network connection switching unit according to Claim 1, **characterized in that** the communication maintenance means (22 to 26) are configured to confirm the activity of the inactivated network station (15) at particular intervals.

3. Network connection switching unit according to one of the preceding claims, **characterized in that** the communication maintenance means (22 to 26) are configured to maintain the reservation of the address allocated to the inactivated network station (15).

4. Network connection switching unit according to Claim 3, **characterized in that** the allocated address is an IP address which has been allocated on the basis of the Dynamic Host Configuration Protocol, DHCP.

5. Network connection switching unit according to Claim 4, **characterized in that** the communication maintenance means (22 to 26) are designed such that they maintain the reservation of the IP address by requesting renewal of the DHCP validity time, DHCP Lease Time, from a DHCP server (10).

6. Network connection switching unit according to one of the preceding claims, **characterized in that** the communication maintenance means (22 to 26) have detection means (26) for identifying the break in a connection at a network connection point (25), and **in that** the communication maintenance means (22 to 26) are designed such that they generates logoff message for the inactivated network station (15) when the detection means (26) respond.

7. Network connection switching unit according to one of the preceding claims, **characterized in that** the communication maintenance means (22 to 26) are deactivated for the inactivated network station when a logon message from the inactivated network station (15) has been identified.

8. Network connection switching unit according to one of the preceding claims, **characterized in that** network stations are logged on and off and the search queries are sent on the basis of the SSDP protocol, with SSDP standing for Simple Service Discovery Protocol, the logon message corresponding to an SSDP:alive message and the logoff message corresponding to an SSDP:byebye message.

9. Network connection switching unit according to one of the preceding claims, **characterized in that** the network connection switching unit is designed on the basis of the UPnP standard, and the communication maintenance means (22 to 26) are configured to undertake provision of at least the device description and also of the service description of the inactivated network station.

10. Network connection switching unit according to Claim 9, **characterized in that** the communication maintenance means (22 to 26) have event management means which are configured to undertake renewal of the event notifications submitted for the inactivated network station (15).

11. Network connection switching unit according to one of the preceding claims, **characterized in that** the communication maintenance means are configured to send a wakeup message to the inactivated network station (15) when a message for the inactivated network station (15) has arrived which cannot be handled independently by the communication maintenance means (22 to 26).

12. Network connection switching unit according to Claim 11, **characterized in that** the wakeup message corresponds to a Wake-on-LAN data packet.

13. Network connection switching unit according to one of the preceding claims, **characterized in that** the communication maintenance means (22 to 26) have evaluation means for a special message from a network station which signals the network station's wakeup capability, and the evaluation means are configured to generate a confirmation message as response in order to signal to the network station (15) that it is connected to a network connection switching unit having communication maintenance means (22 to 26).

## Patentansprüche

1. Netzverbindungsschalteinheit (10) mit einer Anzahl von Netzverbindungspunkten (25), wobei die Netzverbindungsschalteinheit Schaltmittel (20), die intermittierend oder mit periodischer Wiederholung physikalische Verbindungen zwischen den Netzverbindungspunkten (25) aufbauen, aufweist, erste Bewertungsmittel zum Bewerten von Abmeldenachrichten von den über die Netzverbindungspunkte (25) verbundenen Netzstationen aufweist und außerdem Kommunikationsaufrechterhaltungsmittel (22 bis 26), die die Kommunikation für eine inaktivierte Netzstation (15) anstelle der inaktivierten Netzstation (15) mindestens bis zu einem beschränkten Ausmaß aufrechterhalten, aufweist, wobei die Kommunikationsaufrechterhaltungsmittel (22 bis 26) zweite Bewertungsmittel für eine Suchanforderungsnachricht (ESWITCH-SEARCH) von einer Netzstation, die die Weckfähigkeit der Netzstation signalisiert, aufweisen, wobei die zweiten Bewertungsmittel in Ansprechen auf die Suchanforderungsnachricht (ESWITCH-SEARCH) eine Bestätigungsnachricht erzeugen, um der Netzstation (15) zu signalisieren, dass sie mit einer Netzverbindungsschalteinheit (10) mit Kommunikationsaufrechterhaltungsmitteln (22 bis 26) direkt verbunden ist, falls die Suchanforderungsnachricht von einer Netzstation gekommen ist, die mit einem der Netzverbindungspunkte (25) der Netzverbindungsschalteinheit (10) direkt verbunden ist, und wobei die zweiten Bewertungsmittel in Ansprechen auf die Suchanforderungsnachricht (ESWITCH-SEARCH) eine Bestätigungsnachricht erzeugen, um der Netzstation (15) zu signalisieren, dass sie mit einer Netzverbindungsschalteinheit (10) mit Kommunikationsaufrechterhaltungsmitteln (22 bis 26) indirekt verbunden ist, falls die Suchanforderungsnachricht von einer Netzstation gekommen ist, die nicht direkt mit einem der Netzverbindungspunkte (25) der Netzverbindungsschalteinheit (10) verbunden ist.

2. Netzverbindungsschalteinheit nach Anspruch 1, **dadurch gekennzeichnet, dass** die Kommunikationsaufrechterhaltungsmittel (22 bis 26) in bestimmten Abständen die Aktivität der inaktivierten Netzstation (15) bestätigen.

3. Netzverbindungsschalteinheit nach einem der vorhergehenden Ansprüche, **dadurch gekennzeichnet, dass** die Kommunikationsaufrechterhaltungsmittel (22 bis 26) die Reservierung der der inaktivierten Netzstation (15) zugeordneten Adresse aufrechterhalten.

4. Netzverbindungsschalteinheit nach Anspruch 3, **dadurch gekennzeichnet, dass** die zugeordnete Adresse eine IP-Adresse ist, die auf der Grundlage des DHCP-Protokolls (Dynamic-Host-Configuration-Protocol-Protokolls) zugeordnet worden ist.

5. Netzverbindungsschalteinheit nach Anspruch 4, **dadurch gekennzeichnet, dass** die Kommunikationsaufrechterhaltungsmittel (22 bis 26) so ausgelegt sind, dass sie die Reservierung der IP-Adresse durch Aufrechterhalten der Erneuerung der DHCP-Gültigkeitszeit (DHCP-Lease-Time) von einem DHCP-Server (10) aufrechterhalten.

6. Netzverbindungsschalteinheit nach einem der vorhergehenden Ansprüche, **dadurch gekennzeichnet, dass** die Kommunikationsaufrechterhaltungsmittel (22 bis 26) Detektionsmittel (26) zum Identifizieren der Unterbrechung in einer Verbindung bei einem Netzverbindungspunkt (25) aufweisen und dass die Kommunikationsaufrechterhaltungsmittel (22 bis 26) so ausgelegt sind, dass sie für die inaktivierte Netzstation (15) eine Abmeldenachricht erzeugen, wenn die Detektionsmittel (26) antworten.

7. Netzverbindungsschalteinheit nach einem der vorhergehenden Ansprüche, **dadurch gekennzeichnet, dass** die Kommunikationsaufrechterhaltungsmittel (22 bis 26) für die inaktivierte Netzstation deaktiviert werden, wenn eine Anmeldenachricht von der inaktivierten Netzstation (15) identifiziert worden ist.

8. Netzverbindungsschalteinheit nach einem der vorhergehenden Ansprüche, **dadurch gekennzeichnet, dass** Netzstationen auf der Grundlage des SSDP-Protokolls an- und abgemeldet werden und dass die Suchabfragen auf der Grundlage des SSDP-Protokolls gesendet werden, wobei SSDP für Simple Service Discovery Protocol steht, wobei die Anmeldenachricht einer SSDP:alive-Nachricht entspricht und die Abmeldenachricht einer SSDP:byebye-Nachricht entspricht.

9. Netzverbindungsschalteinheit nach einem der vorhergehenden Ansprüche, **dadurch gekennzeichnet, dass** die Netzverbindungsschalteinheit auf der Grundlage des UPnP-Standards ausgelegt ist und dass die Kommunikationsaufrechterhaltungsmittel (22 bis 26) die Bereitstellung mindestens der Vorrichtungsbeschreibung und ebenfalls der Dienstbeschreibung der inaktivierten Netzstation vornehmen.

10. Netzverbindungsschalteinheit nach Anspruch 9, **dadurch gekennzeichnet, dass** die Kommunikationsaufrechterhaltungsmittel (22 bis 26) Ereignismanagementmittel aufweisen, die eine Erneuerung der für die inaktivierte Netzstation (15) eingereichten Ereignisbenachrichtigungen vornehmen.

11. Netzverbindungsschalteinheit nach einem der vorhergehenden Ansprüche, **dadurch gekennzeichnet, dass** die Kommunikationsaufrechterhaltungsmittel eine Wecknachricht an die inaktivierte Netzstation (15) senden, wenn für die inaktivierte Netzstation (15) eine Nachricht angekommen ist, die durch die Kommunikationsaufrechterhaltungsmittel (22 bis 26) nicht unabhängig behandelt werden kann.

12. Netzverbindungsschalteinheit nach Anspruch 11, **dadurch gekennzeichnet, dass** die Wecknachricht einem Wake-on-LAN-Datenpaket entspricht.

13. Netzverbindungsschalteinheit nach einem der vorhergehenden Ansprüche, **dadurch gekennzeichnet, dass** die Kommunikationsaufrechterhaltungsmittel (22 bis 26) Bewertungsmittel für eine spezielle Nachricht von einer Netzstation, die die Weckfähigkeit der Netzstation signalisiert, aufweisen und dass die Bewertungsmittel als Antwort eine Bestätigungsnachricht erzeugen, um der Netzstation (15) zu signalisieren, dass sie mit einer Netzverbindungsschalteinheit mit Kommunikationsaufrechterhaltungsmitteln (22 bis 26) verbunden ist.

## Revendications

1. Unité de commutation de connexion réseau (10) ayant un nombre de points de connexion réseau (25), ayant un moyen de commutation (20) configuré pour établir des connexions physiques entre les points de connexion réseau (25) de manière intermittente ou avec une récurrence périodique, ayant un premier moyen d'évaluation pour évaluer des messages de déconnexion des stations de réseau connectées via les points de connexion réseau (25) et des éléments de maintien de communication (22 à 26) configurés pour maintenir la communication pour une station de réseau inactivée (15) au moins dans une mesure restreinte au lieu de la station de réseau inactivée (15),
- dans laquelle les éléments de maintien de communication (22 à 26) possèdent un second moyen d'évaluation pour évaluer un message de requête de recherche, ESWITCH-SEARCH, depuis une station de réseau qui signale la capacité de réveil de la station de réseau, dans lequel le second moyen d'évaluation est configuré pour générer un message de confirmation en réponse au message de requête de recherche, ESWITCH-SEARCH, afin de signaler à la station de réseau (15) directement connectée à une unité de commutation de connexion réseau (10) possédant des éléments de maintien de communication (22 à 26) dans le cas où le message de requête de recherche provient d'une station de réseau directement connectée à l'un des points de connexion réseau (25) de l'unité de commutation de connexion réseau (10), et
- dans laquelle le second moyen d'évaluation est configuré pour générer un message de confirmation en réponse au message de requête de recherche, ESWITCH-SEARCH, afin de signaler à la station de réseau (15) indirectement connectée à une unité de commutation de connexion réseau (10) possédant des éléments de maintien de communication (22 à 26) dans le cas où le message de requête de recherche provient d'une station de réseau qui n'est pas directement connectée à l'un des points de connexion réseau (25) de l'unité de commutation de connexion réseau (10).

2. Unité de commutation de connexion réseau selon la revendication 1, **caractérisée en ce que** les éléments de maintien de communication (22 à 26) sont configurés pour confirmer l'activité de la station de réseau inactivée (15) à des intervalles particuliers.

3. Unité de commutation de connexion réseau selon l'une des revendications précédentes, **caractérisée en ce que** les éléments de maintien de communication (22 à 26) sont configurés pour maintenir la réservation de l'adresse allouée à la station de réseau inactivée (15).

4. Unité de commutation de connexion réseau selon la revendication 3, **caractérisée en ce que** l'adresse allouée est une adresse IP qui a été allouée sur la base du protocole DHCP (Dynamic Host Configuration Protocol).

5. Unité de commutation de connexion réseau selon la revendication 4, **caractérisée en ce que** les éléments de maintien de communication (22 à 26) sont conçus de sorte qu'il maintiennent la réservation de l'adresse IP en demandant le renouvellement de la durée de validité DHCP, DHCP Lease Time, depuis un serveur DHCP (10).

6. Unité de commutation de connexion réseau selon l'une des revendications précédentes, **caractérisée en ce que** les éléments de maintien de communication (22 à 26) possèdent un moyen de détection (26) pour identifier la coupure d'une connexion au niveau d'un point de connexion réseau (25), et **en ce que** les éléments de maintien de communication (22 à 26) sont conçus de sorte qu'ils génèrent un message de déconnexion pour la station de réseau inactivée (15) lorsque le moyen de détection (26) répond.

7. Unité de commutation de connexion réseau selon l'une des revendications précédentes, **caractérisée en ce que** les éléments de maintien de communication (22 à 26) sont désactivés pour la station de réseau inactivée lorsqu'un message de connexion de la station de réseau inactivée (15) a été identifié.

8. Unité de commutation de connexion réseau selon l'une des revendications précédentes, **caractérisée en ce que** les stations de réseau sont connectées et déconnectées et les requêtes de recherche sont envoyées sur la base du protocole SSDP (Simple Service Discovery Protocol), le message de connexion correspondant à un message SSDP.alive et le message de déconnexion correspondant à un message SSDP.byebye.

9. Unité de commutation de connexion réseau selon l'une des revendications précédentes, **caractérisée en ce que** l'unité de commutation de connexion réseau est conçue sur la base de la norme UPnP, et les éléments de maintien de communication (22 à 26) sont configurés pour entreprendre la fourniture d'au moins la description du dispositif et de la description du service de la station de réseau inactivée.

10. Unité de commutation de connexion réseau selon la revendication 9, **caractérisée en ce que** les éléments de maintien de communication (22 à 26) possèdent un moyen de gestion configuré pour entreprendre le renouvellement des notifications d'événement envoyées pour la station de réseau inactivée (15).

11. Unité de commutation de connexion réseau selon l'une des revendications précédentes, **caractérisée en ce que** les éléments de maintien de communication sont configurés pour envoyer un message de réveil à la station de réseau inactivée (15) lorsqu'un message pour la station de réseau inactivée (15) qui ne peut pas être géré indépendamment par les éléments de maintien de communication (22 à 26) arrive.

12. Unité de commutation de connexion réseau selon la revendication 11, **caractérisée en ce que** le message de réveil correspond à un paquet de données Wake-on-LAN.

13. Unité de commutation de connexion réseau selon l'une des revendications précédentes, **caractérisée en ce que** les éléments de maintien de communication (22 à 26) possèdent un moyen d'évaluation pour un message spécial d'une station de réseau qui signale la capacité de réveil de la station de réseau, le moyen d'évaluation étant configuré pour générer un message de confirmation comme réponse afin de signaler à la station de réseau (15) qu'elle est connectée à l'unité de commutation de connexion réseau possédant des éléments de maintien de communication (22 à 26).
